# EUROPEAN PATENT SPECIFICATION

(11) **EP 3 721 693 B1**
(45) Date of publication and mention of the grant of the patent: **14.07.2021**
(21) Application number: 19168995.9
(22) Date of filing: 12.04.2019
(51) Int. Cl.: A01D 23/04

(54) **DEVICE FOR REMOVING LEAVES FROM ROOT CROPS**
VORRICHTUNG ZUM ENTFERNEN VON BLÄTTERN VON WURZELFRÜCHTEN
DISPOSITIF DE RETRAIT DE FEUILLES DE PLANTES RACINES

(43) Date of publication of application: 14.10.2020
(73) Proprietor: Dewulf NV, 8800 Roeselare (BE)
(72) Inventor: VAN ISEGHEM, Joeri, 8770 INGELMUNSTER (BE); DE BOE, Gert, 9080 LOCHRISTI (BE)
(74) Representative: Hostens, Veerle

(56) References cited:
- GB-A- 396 560
- SU-A1- 858 621
- US-A- 1 942 011

## Description

This invention relates to a device for removing leaves from root crops, such as carrots, beetroots, sugar beets, radishes, turnips or the like, comprising a pair of sets of bars and bearing blocks, the bars of each set being rotatably mounted with their ends to respective bearing blocks of the set for simultaneous rotation. Such devices can also be used for e.g. harvesting cotton and like plants, harvesting and husking ears of corn and harvesting corn and like stalk crops.

In addition, the present invention relates to a bar for such a device and to a harvesting machine comprising such a device.

The invention is furthermore related to a method for maintenance of such a device.

Such devices are e.g. known from US 3,307,599 and US 3,863,555. These devices are used for removing leaves from root crops at harvesting thereof in a harvesting machine.

In this harvesting machine, the root crops enter between the two sets of bars of the device, while these bars are rotated. In order to rotate the bars, the bearing blocks of both sets are rotated, such that the bars travel in an elliptical path. The bars of the first set move in one direction, while the bars of the other set move in counter-rotation. The bars rotate in the bearing blocks to maintain their orientation with respect to the root crops. The leaves of the root crops are grasped by the bars, move forward and are sheared or teared from the rest of the root crops. The roots itself drop down, while the leaves are moved forward.

The cross sections of the bars may have different forms. Depending on the type of root crops and depending on the part of the leaves which is to be removed from the rest of the root crops, the bars of these devices are rather rounded bars with a cross section with a rather elliptical form or take the form of knives with knife blades.

The bars of these devices are highly subjected to wear. In order to extend the lifespan of these bars, different solutions have already been considered. Manufacturing the bars in a material which is less prone to wear is typically a more expensive solution. Alternative bars were therefore developed, with only a part thereof being made from a more durable material. Examples of such bars are e.g. known from GB 396,560.

It is an object of the present invention to provide an alternative solution to extend the lifespan of the bars of such devices for removing leaves from root crops.

This object is achieved by providing a device for removing leaves from root crops, such as carrots, comprising a pair of sets of bars and bearing blocks, the bars of each set being rotatably mounted with their ends to respective bearing blocks of the set for simultaneous rotation and each bar being rotational symmetrical with respect to rotation over 180° around a symmetry axis and being releasably fixed in the device, such that when fixed in the device in a first position, each bar is releasable, is turnable over 180° around the symmetry axis for placing it in a second position and is fixable in this second position in the device.

The greatest wear during operation typically occurs in a zone that covers a first part of the device where the root crops enter the device. The cross section of the bars decreases in this zone and the bars become thinner. If a bar in this zone is too worn, this bar should nowadays be replaced. With a device according to the invention, instead of replacing this bar, it is turned over 180° and used again. With existing bars in existing devices, this was not possible. Making the bars of a device according to the invention substantially rotational symmetrical with respect to 180° around a symmetry axis and releasably fixable, makes it possible to reuse the bars before replacing them. The lifespan of the bars is thus minimally increased with a factor 2. The bars are substantially rotational symmetrical, when they are rotational symmetrical or slightly deviate therefrom, but still can be turned 180° and reused again.

It is also more advantageous to manufacture such bars, or part thereof, from a more durable material than with the bars of the prior art devices, such that the lifespan thereof can even further be increased.

In order to provide the bars releasably fixable, the bearing blocks of each set are preferably releasably fixable in the device. The bars of a set will typically wear to a same extent. Instead of demounting and mounting each bar separately, it is then more advantageous to demount and mount each set as a whole. Both the bars and bearing blocks of a set can then be disassembled from the device, turned over 180° and reassembled. This goes much faster than disassembling and assembling each and every bar separately. Less time is spent and the cost is thus smaller.

In order to provide the bearing blocks releasably fixable, the bearing blocks of each set are moreover preferably interchangeable and even more preferably identical to each other. These can also be provided interchangeable with the bearing blocks of the other set. If all bearing blocks are made identical to each other, less spare parts are to be provided.

The bars of each set are also preferably interchangeable and can also be provided interchangeable with bars of the other set. Even more preferable, all bars will be identical to each other.

It is optionally ensured in a device according to the invention that the bars are releasably fixable, both individually and as part of the respective set. In case an individual bar is defective, it can then still be replaced individually.

In a specific embodiment of a device according to the invention wherein each bar comprises a knife blade, the cross-section of this knife blade is provided line symmetrical with respect to the symmetry axis.

In a device according to the invention, the mutual position of the sets is preferably adjustable and the device preferably comprises setting means for adjusting this position.

The setting means can in this respect comprise distance adjusting means for adjusting the positon of the bearing blocks at a first end of the sets towards and away from each other and/or distance adjusting means for adjusting the position of the bearing blocks at a second end of the sets towards and away from each other.

When the bars are worn out everywhere and the cross section of the bars is almost the same everywhere, but is narrower than with new bars, the bars can then be placed closer together using these distance adjusting means. The same bars can thus further be used and the process can start again, wherein after a while, the bars are turned over 180° and reused again. Theoretically, this process can continue until the cross section of the bars has become too thin. This means that the lifetime of the bars is increased by a large factor.

The setting means can also more specifically comprise angle adjusting means for adjusting the rotational position of the bearing blocks with respect to each other. More specifically, the position of the bearing blocks can then be adjusted in such a way that the bars of both sets can be positioned in phase with each other or out of phase with each other.

With "in phase" is meant that, when the sets are rotated, bars of both sets coincide with a line intersecting their axes of rotation at the same time, whereas they coincide with this line at different times when they are "out of phase".

The object of the invention is furthermore achieved by providing a bar for a device for removing leaves from root crops, such as carrots, the bar comprising cranked ends, each cranked end being provided with a mounting pin for mounting the bar in the device, and the bar being rotational symmetrical with respect to rotation over 180° around a symmetry axis.

Such a bar is preferably provided as a bar for a device according to the invention, as described here above.

The object of the invention is also achieved by providing a harvesting machine for harvesting root crops, such as carrots, comprising a device for removing the leaves from the root crops according to the invention as described here above.

Additionally, the object of the invention is achieved by providing a method for maintenance of a device for removing the leaves from root crops, such as carrots, the device being a device according to the invention as described here above, wherein at least one bar, which is mounted in the device in its first position, is demounted, is turned over 180° with respect to the symmetry axis and is mounted in the device in its second position.

In a preferred method according to the invention, the device is a device with bearing blocks, which are releasably fixed in the device, and the bearing blocks to which the at least one bar is mounted, are demounted and mounted for demounting and mounting the at least one bar. This at least one bar can in that case either separately be demounted from the bearing blocks and mounted again, or can together with the other bars of the same set and the corresponding bearing blocks be demounted and mounted again.

The present invention will now be explained in more detail by means of the following detailed description of a harvester according to the present invention. The sole aim of this description is to give explanatory examples and to indicate further advantages and particulars of the present invention, and can thus by no means be interpreted as a limitation of the area of application of the invention or of the patent rights defined in the claims.

In this detailed description, reference numerals are used to refer to the attached drawings, in which in:
- Fig. 1 part of a carrot harvester is illustrated in side view;
- Fig. 2 the device for removing leaves from carrots in the carrot harvester of fig. 1 is illustrated in perspective;
- Fig. 3 the first set of the device of fig. 2 is separately illustrated in perspective;
- Fig. 4 the knives of the sets of the device of fig. 2 are illustrated in cross-section and positioned out of phase;
- Fig. 5 the knives of the sets of the device of fig. 2 are illustrated in cross-section and positioned in phase;
- Fig. 6 the device of fig. 2 is separately illustrated in a detailed cross-section at the height of the first end of the first set;
- Fig. 7 the device of fig. 2 is separately illustrated in a detailed cross-section at the height of the second end of the first set;

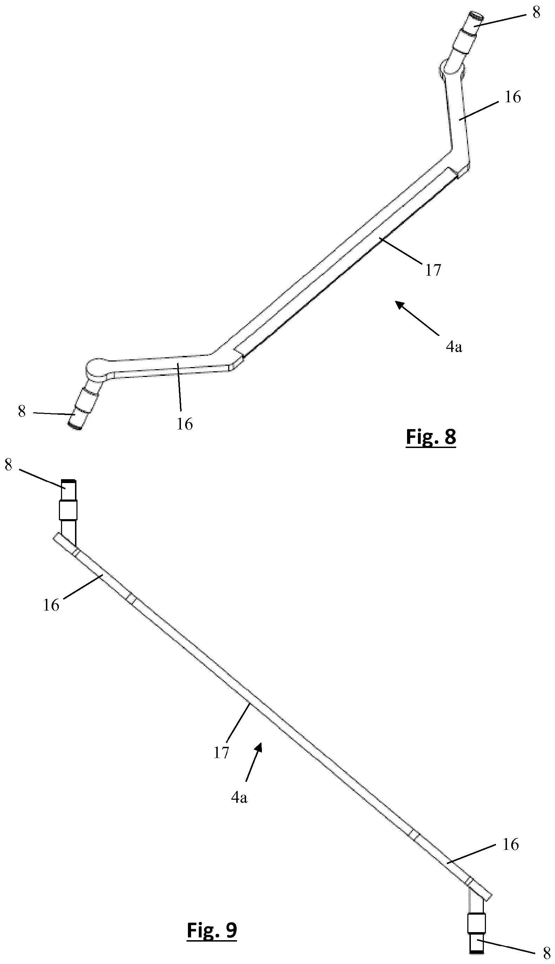

- Fig. 8 a knife of the device of fig. 2 is separately illustrated in perspective view;
- Fig. 9 the knife of fig. 8 is illustrated in side view;
- Fig. 10 the knife of fig. 8 is illustrated in front view;
- Fig. 11 the knife of fig. 8 is illustrated in cross section, cut through the knife blade, according to cut DD' as indicated in fig. 12;
- Fig. 12 the knife of fig. 8 is illustrated in top view.

The illustrated harvesting machine (1) is a carrot harvester. Similar harvesters can be provided for harvesting other types of root crops.

With such carrot harvester (1), carrots are removed from the soil with plow blades, which are not illustrated. These carrots are then moved upwards between two conveyor belts (18), towards the device (2) for severing the leaves from these carrots. The device (2) shears or tears the leaves from the rest of the carrots, which drop down. The leaves are further moved forward by the conveyor belts (18).

The device (2) comprises a first set (3a) of bars (4a) and bearing blocks (5a, 6a) and a second set (3b) of bars (4b) and bearing blocks (5b, 6b).

In the illustrated embodiment, the bars (4a, 4b) are provided as knives (4a, 4b). Each knife (4a, 4b) comprises a knife blade (17) and cranked ends (16). Each cranked end (16) is provided with a mounting pin (8) for mounting the knife (4a, 4b) in the respective bearing block (5a, 5b, 6a, 6b).

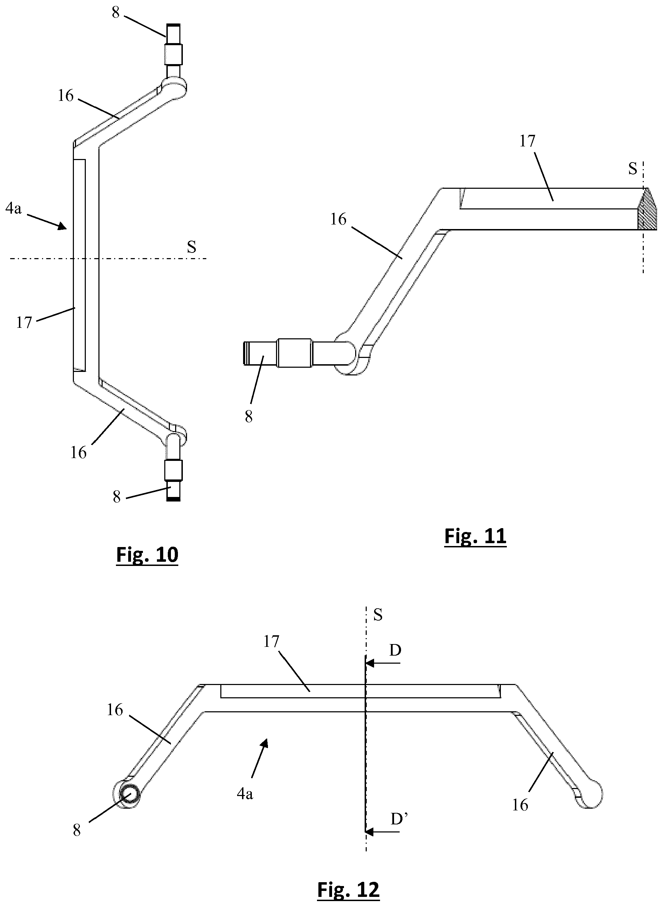

As can be seen in figures 10-12, each knife is rotational symmetrical with respect to rotation over 180° around a symmetry axis (S) and the cross-section of the knife blade (17) thereof is line symmetrical with respect to this symmetry axis (S).

All knives (4a, 4b) of the illustrated embodiment are identical.

The knives (4a, 4b) of each set (3a, 3b) are rotatably mounted with their ends to the respective bearing blocks (5a, 5b, 6a, 6b) of the corresponding set (3a, 3b) for simultaneous rotation.

The bearing blocks (5a, 5b, 6a, 6b) comprise a central bore (9) and secondary bores (10), which are equally spaced around the central bore (9). The secondary bores (10) extend parallel to the central bore (9).

The mounting pins (8) of the knives (4a, 4b) are journaled in the secondary bores (10). These mounting pins (8) are rotatably mounted in these secondary bores (10) by means of roller bearings (15).

The bearing blocks (5a, 5b) at the top of the bars (4a, 4b) are driving bearing blocks (5a, 5b). A driving shaft (13) which can be driven by means of driving means (19), is journaled and secured in the central bore (9) of each driving bearing block (5a, 5b). This driving shaft (13) is rotatably mounted in the device by means of a bearing attachment (21).

The bearing blocks (6a, 6b) at the bottom of the bars (4a, 4b) are driven bearing blocks (6a, 6b). A rotatable shaft (14) is journaled and secured in the central bore (9) of each driven bearing block (6a, 6b). This rotatable shaft (14) is rotatably mounted in the device by means of a bearing attachment (25).

All illustrated bearing blocks (5a, 5b, 6a, 6b) are identical, but this is not mandatory. At both ends, a cover plate (11, 12) is fixed to the respective bearing blocks (5a, 5b, 6a, 6b) e.g. by means of bolts (20), to protect the roller bearings (15) from dirt. Both cover plates (11, 12) can be fixed to the respective shafts (13,14), e.g. by means of welding. Alternatively, these cover plates (11, 12) could e.g. be fixed to the respective bearing blocks (5an 5b, 6a, 6b) by means of press fitting.

In order to remove the leaves from the carrots with the device (2), the carrots enter between the bars (4a, 4b) of the device (2), while these bars (4a, 4b) are rotated. In order to rotate the bars (4a, 4b), the driving bearing blocks (5a, 5b) of both sets (3a, 3b) of bars (4a, 4b) and the driven bearing blocks (6a, 6b) are rotated around their rotation axis (Rₘ), such that the bars (4a, 4b) travel in an elliptical path. The bars (4a) of the first set (3a) move in one direction, while the bars (4b) of the other set (3b) move in counter-rotation. The bars (4a, 4b) rotate in the bearing blocks (5a, 5b, 6a, 6b) around their rotation axis (Rₚ) to maintain their orientation with respect to the carrots.

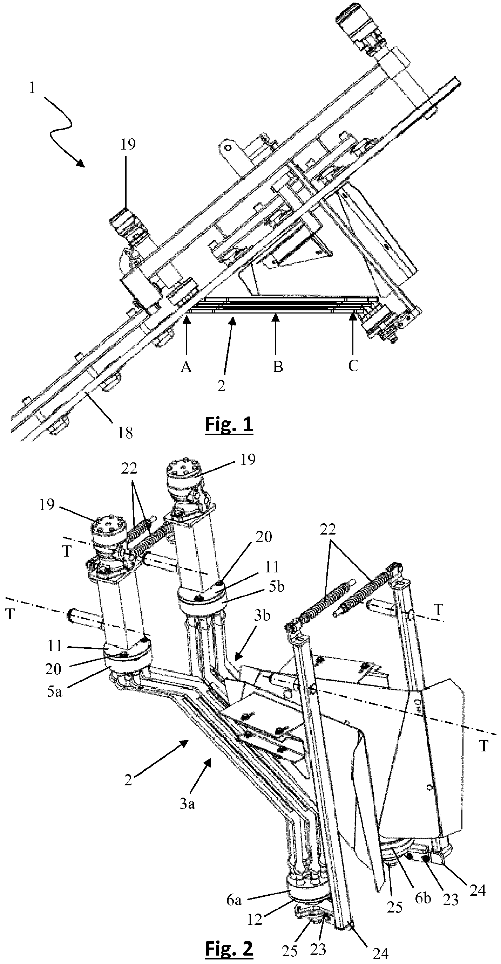

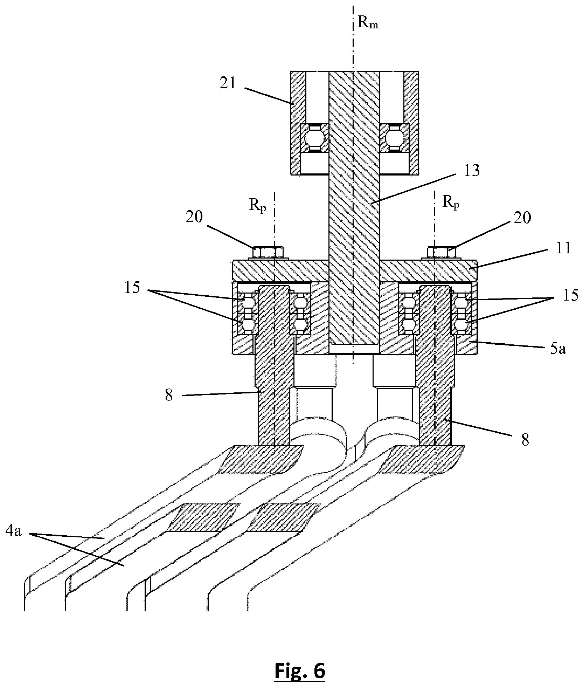

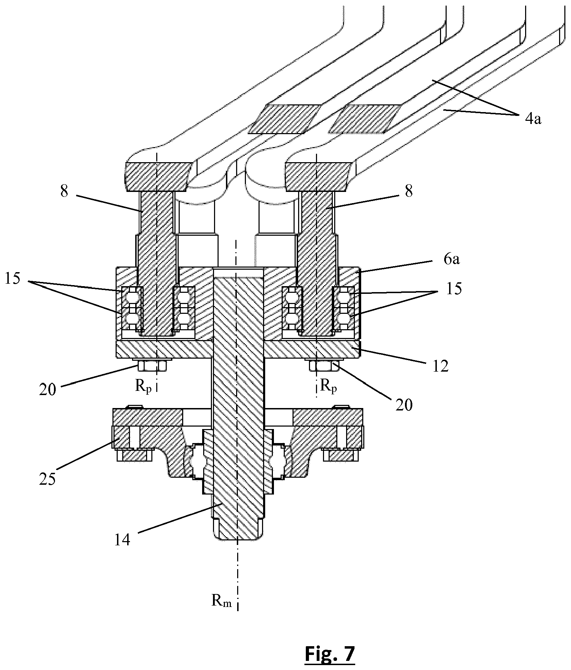

In the illustrated embodiment, the knives (4a) from the first set (3a) can be disassembled from the device (2) as follows. The bolts (23) and nuts with which the driven bearing block (6a) is mounted to a mounting frame (24) (see fig. 2), are loosened. Thereafter, the rotatable shaft (14) and its bearing attachment (25) are rotated over 120°, so that they can be lowered, without being hindered by the mounting frame (24). Then the bolts (20) with washers (see fig. 7) are removed from the cover element (12) of the driven bearing block (6a). The rotatable shaft (14) is then pulled out of the driven bearing block (6a), together with its cover element (12) and its bearing attachment (25). It is possible to provide this rotatable shaft (14) and/or its cover element (12) and/or its bearing attachment (25) with a gripping element in order to engage this gripping element for more easily pulling out of the rotatable shaft (14). Then the first set (3a) is rotated away from the second set (3b) so that the first set (3a) can be disassembled without being hindered by the mounting elements with which the second set (3b) is mounted. Then the bolts (20) with washers from the cover element (11) of the driving bearing block (5a) (see fig. 6) are loosened, such that the driving bearing block (5a) can be disassembled. The first set (3a) is disassembled together with this driving bearing block (5a).

The first set (3a) can then be turned over 180°, so that the driving bearing block (5a) is lowered to take the place of the driven bearing block (5b) and vice versa. The first set (3a) is then mounted in the reverse order.

Alternatively, it is also possible only to demount one single knife (4a) from the first set (3a) individually from the bearing blocks (5a, 6a), turn this knife (4a) over 180°, mount this knife (4a) back in the bearing blocks (5a, 6a) and then to mount the whole set (3a) again.

The knives (4b) of the second set (3b) can be disassembled, turned and mounted in a similar way.

In the mounted position the mutual position of the sets (3a, 3b) is adjustable. The sets are resiliently suspended in the device (2) by means of springs (22) and rotatable around rotation axes T (see fig. 2). If a thick pile of leaves or a stone enters between the knives (4a, 4b), the sets (3a, 3b) can be moved away from each other against the spring force. The springs (22) are pressed in. When the thick pile or stone leaves, the sets (3a, 3b) are automatically returned to their initial position. This initial position between the sets (3a, 3b) can be adjusted by turning the counter nuts of these springs (22). These counter nuts function as distance adjusting means. When the knives (4a, 4b) are worn out, the sets (3a, 3b) can be placed closer together by turning these counter nuts.

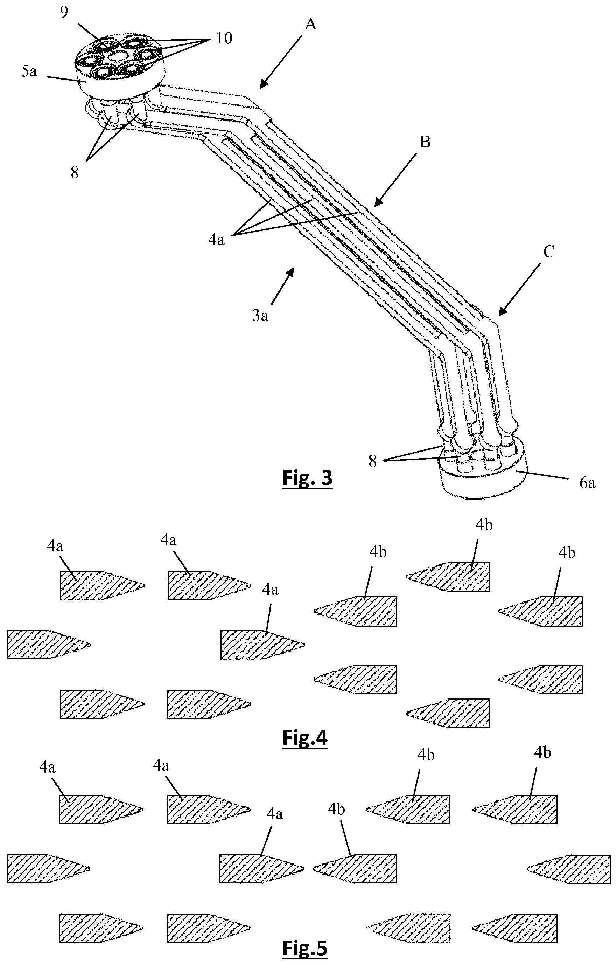

During operation, the greatest wear of the knives occurs in the zone between arrows A and B in fig. 1 and 3. The zone between the arrows B and C is hardly worn. Due to the wear, the cross section of the knife decreases and the knife becomes thinner. If the zone between the arrows A and B is too worn, the set (3a, 3b) can be demounted, turned and remounted as described above. The part between the arrows A and B is then interchanged with the part between the arrows B and C and vice versa. After a while, the part between the arrows B and C will be as much worn as the part between the arrows A and B. The sets (3a, 3b) can then be placed closer together by turning the counter nuts of the springs (22). This process can then be repeated and after a while, the sets (3a, 3b) can be demounted, turned and remounted again.

The sets (3a, 3b) can furthermore (slightly) be twisted with respect to each other. In order to do this, the cover elements (11, 12) are provided with slotted holes, in which the bolts (20) for fixing these cover elements (11, 12) are entered. These slotted holes are not visible in the drawings. These slotted holes can be provided sufficiently long, in order to serve as angle adjusting means with which the knives (4a, 4b) can be positioned either out of phase with each other (see fig. 4), or in phase with each other (see fig. 5).

## Claims

1. Device (2) for removing leaves from root crops, such as carrots, comprising a pair of sets (3a, 3b) of bars (4a, 4b) and bearing blocks (5a, 5b, 6a, 6b), the bars (4a, 4b) of each set (3a, 3b) being rotatably mounted with their ends to respective bearing blocks (5a, 5b, 6a, 6b) of the set (3a, 3b) for simultaneous rotation, **characterized in that** each bar (4a, 4b) is rotational symmetrical with respect to rotation over 180° around a symmetry axis (S) and is releasably fixed in the device (2), such that when fixed in the device (2) in a first position, each bar (4a, 4b) is releasable, is turnable over 180° around the symmetry axis (S) for placing it in a second position and is fixable in this second position in the device (2).

2. Device (2) according to claim 1, **characterized in that** the bearing blocks (5a, 5b, 6a, 6b) of each set (3a, 3b) are releasably fixed in the device (2) for releasably fixing the bars (4a, 4b) of this set (3a, 3b) in the device (2).

3. Device (2) according to claim 2, **characterized in that** the bearing blocks (5a, 5b, 6a, 6b) of each set (3a, 3b) are interchangeable.

4. Device (2) according to any of the preceding claims, **characterized in that** the bars (4a, 4b) of each set (3a, 3b) are interchangeable.

5. Device (2) according to any of the preceding claims, **characterized in that** each bar (4a, 4b) comprises a knife blade (17) and that the cross-section of this knife blade (17) is line symmetrical with respect to the symmetry axis (S).

6. Device (2) according to any of the preceding claims, **characterized in that** the mutual position of the sets (3a, 3b) is adjustable and that the device (2) comprises setting means for adjusting this position.

7. Device (2) according to claim 6, **characterized in that** the setting means comprise distance adjusting means for adjusting the positon of the bearing blocks (5a, 5b, 6a, 6b) at a first end of the sets (3a, 3b) towards and away from each other and/or distance adjusting means for adjusting the position of the bearing blocks (5a, 5b, 6a, 6b) at a second end of the sets (3a, 3b) towards and away from each other.

8. Device (2) according to claim 6 or 7, **characterized in that** the setting means comprise angle adjusting means for adjusting the position of the bearing blocks (5a, 5b, 6a, 6b) such that the bars (4a, 4b) of both sets (3a, 3b) can be positioned in phase with each other or out of phase with each other.

9. Bar (4a, 4b) for a device (2) for removing leaves from root crops, such as carrots, the bar (4a, 4b) comprising cranked ends (16), each cranked end (16) being provided with a mounting pin (8) for mounting the bar (4a, 4b) in the device (2), **characterized in that** the bar (4a, 4b) is rotational symmetrical with respect to rotation over 180° around a symmetry axis (S).

10. Bar (4a, 4b) according to claim 9, **characterized in that** the bar (4a, 4b) is a bar (4a, 4b) for a device (2) according to any of claims 1-8.

11. Harvesting machine (1) for harvesting root crops, such as carrots, comprising a device (2) for removing the leaves from the root crops, **characterized in that** the device (2) is a device (2) according to any of claims 1-8.

12. Method for maintenance of a device (2) for removing the leaves from root crops, such as carrots, **characterized in that** the device (2) is a device (2) according to any of claims 1-8 and that at least one bar (4a, 4b), which is mounted in the device (2) in its first position, is demounted, is turned over 180° with respect to the symmetry axis (S) and is mounted in the device (2) in its second position.

13. Method according to claim 12, **characterized in that** the device (2) is a device (2) according to claim 2 and that the bearing blocks (5a, 5b, 6a, 6b) to which the at least one bar (4a, 4b) is mounted, are demounted and mounted for demounting and mounting the at least one bar (4a, 4b).

14. Method according to claim 13, **characterized in that** the bars (4a, 4b) of the same set (3a, 3b) arc demounted and mounted together with the corresponding bearing blocks (5a, 5b, 6a, 6b).

## Patentansprüche

1. Vorrichtung (2) zum Entfernen von Blättern von Wurzelfrüchten, wie etwa Möhren, umfassend ein Paar von Sätzen (3a, 3b) von Stangen (4a, 4b) und Lagerblöcken (5a, 5b, 6a, 6b), wobei die Stangen (4a, 4b) jedes Satzes (3a, 3b) drehbar mit ihren Enden zu entsprechenden Lagerblöcken (5a, 5b, 6a, 6b) des Satzes (3a, 3b) zur gleichzeitigen Drehung montiert sind, **dadurch gekennzeichnet, dass** jede Stange (4a, 4b) rotationssymmetrisch bezüglich Drehung über 180° um eine Symmetrieachse (S) ist und lösbar in der Vorrichtung (2) befestigt ist, sodass, wenn in der Vorrichtung (2) in einer ersten Position befestigt, jede Stange (4a, 4b) lösbar ist, über 180° um die Symmetrieachse (S) drehbar ist, um sie in eine zweite Position zu bringen, und in dieser zweiten Position in der Vorrichtung (2) befestigbar ist.

2. Vorrichtung (2) nach Anspruch 1, **dadurch gekennzeichnet, dass** die Lagerblöcke (5a, 5b, 6a, 6b) jedes Satzes (3a, 3b) lösbar in der Vorrichtung (2) befestigt sind zum lösbaren Befestigen der Stangen (4a, 4b) dieses Satzes (3a, 3b) in der Vorrichtung (2).

3. Vorrichtung (2) nach Anspruch 2, **dadurch gekennzeichnet, dass** die Lagerblöcke (5a, 5b, 6a, 6b) jedes Satzes (3a, 3b) austauschbar sind.

4. Vorrichtung (2) nach einem der vorhergehenden Ansprüche, **dadurch gekennzeichnet, dass** die Stangen (4a, 4b) jedes Satzes (3a, 3b) austauschbar sind.

5. Vorrichtung (2) nach einem der vorhergehenden Ansprüche, **dadurch gekennzeichnet, dass** jede Stange (4a, 4b) eine Messerklinge (17) umfasst und dass der Querschnitt dieser Messerklinge (17) liniensymmetrisch bezüglich der Symmetrieachse (S) ist.

6. Vorrichtung (2) nach einem der vorhergehenden Ansprüche, **dadurch gekennzeichnet, dass** die gegenseitige Position der Sätze (3a, 3b) einstellbar ist und dass die Vorrichtung (2) Einstellmittel zum Einstellen dieser Position umfasst.

7. Vorrichtung (2) nach Anspruch 6, **dadurch gekennzeichnet, dass** die Einstellmittel Abstandseinsteilmittel zum Einstellen der Position der Lagerblöcke (5a, 5b, 6a, 6b) an einem ersten Ende der Sätze (3a, 3b) zueinander hin oder voneinander weg und/oder Abstandseinstellmittel zum Einstellen der Position der Lagerblöcke (5a, 5b, 6a, 6b) an einem zweiten Ende der Sätze (3a, 3b) zueinander hin und voneinander weg umfassen.

8. Vorrichtung (2) nach Anspruch 6 oder 7, **dadurch gekennzeichnet, dass** die Einstellmittel Winkeleinstellmittel zum Einstellen der Position der Lagerblöcke (5a, 5b, 6a, 6b) umfassen, sodass die Stangen (4a, 4b) beider Sätze (3a, 3b) phasengleich oder phasenverschoben zueinander positioniert werden können.

9. Stange (4a, 4b) für eine Vorrichtung (2) zum Entfernen von Blättern von Wurzelfrüchten, wie etwa Möhren, wobei die Stange (4a, 4b) gekröpfte Enden (16) umfasst, wobei jedes gekröpfte Ende (16) mit einem Montagestift (8) zum Montieren der Stange (4a, 4b) in der Vorrichtung (2) versehen ist, **dadurch gekennzeichnet, dass** die Stange (4a, 4b) rotationssymmetrisch bezüglich einer Drehung über 180° um eine Symmetrieachse (S) ist.

10. Stange (4a, 4b) nach Anspruch 9, **dadurch gekennzeichnet, dass** die Stange (4a, 4b) eine Stange (4a, 4b) für eine Vorrichtung (2) nach einem der Ansprüche 1-8 ist.

11. Erntemaschine (1) zum Ernten von Wurzelfrüchten, wie etwa Möhren, umfassend eine Vorrichtung (2) zum Entfernen der Blätter von den Wurzelfrüchten, **dadurch gekennzeichnet, dass** die Vorrichtung (2) eine Vorrichtung (2) nach einem der Ansprüche 1-8 ist.

12. Verfahren zur Wartung einer Vorrichtung (2) zum Entfernen der Blätter von Wurzelfrüchten, wie etwa Möhren, **dadurch gekennzeichnet, dass** die Vorrichtung (2) eine Vorrichtung (2) nach einem der Ansprüche 1-8 ist und dass zumindest eine Stange (4a, 4b), die in der Vorrichtung (2) in ihrer ersten Position montiert ist, demontiert wird, über 180° bezüglich der Symmetrieachse (S) gedreht wird und in ihrer zweiten Position in der Vorrichtung (2) montiert wird.

13. Verfahren nach Anspruch 12, **dadurch gekennzeichnet, dass** die Vorrichtung (2) eine Vorrichtung (2) nach Anspruch 2 ist und dass die Lagerblöcke (5a, 5b, 6a, 6b), an denen die zumindest eine Stange (4a, 4b) montiert ist, zum Demontieren und Montieren der zumindest einen Stange (4a, 4b) demontiert und montiert werden.

14. Verfahren nach Anspruch 13, **dadurch gekennzeichnet, dass** die Stangen (4a, 4b) des gleichen Satzes (3a, 3b) zusammen mit den entsprechenden Lagerblöcken (5a, 5b, 6a, 6b) demontiert und montiert werden.

## Revendications

1. Dispositif (2) de retrait des feuilles de plantes racines, par exemple des carottes, comprenant une paire d'ensembles (3a, 3b) de barres (4a, 4b) et de blocs de support (5a, 5b, 6a, 6b), les barres (4a, 4b) de chaque ensemble (3a, 3b) étant montées en rotation avec leurs extrémités sur des blocs de support respectifs (5a, 5b, 6a, 6b) de l'ensemble (3a, 3b) pour une rotation simultanée, **caractérisé en ce que** chaque barre (4a, 4b) tourne de façon symétrique par rapport à la rotation sur 180° autour d'un axe de symétrie (S) et est fixé de façon amovible dans le dispositif (2), de sorte que lorsqu'elle est fixée dans le dispositif (2) dans une première position, chaque barre (4a, 4b) peut être libérée, peut tourner sur 180° autour de l'axe de symétrie (S) pour la placer dans une seconde position et peut être fixée dans cette seconde position dans le dispositif (2).

2. Dispositif (2) selon la revendication 1, **caractérisé en ce que** les blocs de support (5a, 5b, 6a, 6b) de chaque ensemble (3a, 3b) sont fixés de façon amovible dans le dispositif (2) pour fixer de façon amovible les barres (4a, 4b) dudit ensemble (3a, 3b) dans le dispositif (2).

3. Dispositif (2) selon la revendication 2, **caractérisé en ce que** les blocs de support (5a, 5b, 6a, 6b) de chaque ensemble (3a, 3b) sont interchangeables.

4. Dispositif (2) selon l'une quelconque des revendications précédentes, **caractérisé en ce que** les barres (4a, 4b) de chaque ensemble (3a, 3b) sont interchangeables.

5. Dispositif (2) selon l'une quelconque des revendications précédentes, **caractérisé en ce que** chaque barre (4a, 4b) comprend une lame de couteau (17) et **en ce que** la section transversale de ladite lame de couteau (17) est symétriquement alignée par rapport à l'axe de symétrie (S).

6. Dispositif (2) selon l'une quelconque des revendications précédentes, **caractérisé en ce que** la position mutuelle des ensembles (3a, 3b) est réglable et **en ce que** le dispositif (2) comprend des moyens de réglage pour régler ladite position.

7. Dispositif (2) selon la revendication 6, **caractérisé en ce que** les moyens de réglage comprennent des moyens de réglage de distance destinés à régler la position des blocs de support (5a, 5b, 6a, 6b) à une première extrémité des ensembles (3a, 3b) en direction de et à distance les uns des autres et/ou des moyens de réglage de distance destinés à régler la position des blocs de support (5a, 5b, 6a, 6b) à une seconde extrémité des ensembles (3a, 3b) en direction de et à distance les uns des autres.

8. Dispositif (2) selon la revendication 6 ou 7, **caractérisé en ce que** les moyens de réglage comprennent des moyens de réglage d'angle destinés à régler la position des blocs de support (5a, 5b, 6a, 6b) de façon que les barres (4a, 4b) des deux ensembles (3a, 3b) puissent être positionnées en phase les unes avec les autres ou hors phase les unes des autres.

9. Barre (4a, 4b) pour un dispositif (2) de retrait des feuilles de plantes racines, par exemple des carottes, la barre (4a, 4b) comprenant des extrémités coudées (16), chaque extrémité coudée (16) étant munie d'une broche de montage (8) destinée à monter la barre (4a, 4b) dans le dispositif (2), **caractérisée en ce que** la barre (4a, 4b) tourne de façon symétrique par rapport à la rotation sur 180° autour d'un axe de symétrie (S).

10. Barre (4a, 4b) selon la revendication 9, **caractérisée en ce que** la barre (4a, 4b) est une barre (4a, 4b) pour un dispositif (2) selon l'une quelconque des revendications 1 à 8.

11. Machine de récolte (1) destinée à récolter des plantes racines, par exemple des carottes, comprenant un dispositif (2) de retrait des feuilles des plantes racines, **caractérisée en ce que** le dispositif (2) est un dispositif (2) selon l'une quelconque des revendications 1 à 8.

12. Procédé d'entretien d'un dispositif (2) de retrait des feuilles de plantes racines, par exemple des carottes, **caractérisé en ce que** le dispositif (2) est un dispositif (2) selon l'une quelconque des revendications 1 à 8, et **en ce qu'**au moins une barre (4a, 4b), qui est montée sur le dispositif (2) dans sa première position, est démontée, est tournée de 180° par rapport à l'axe de symétrie (S) et est montée dans le dispositif (2) dans sa seconde position.

13. Procédé selon la revendication 12, **caractérisé en ce que** le dispositif (2) est un dispositif (2) selon la revendication 2 et **en ce que** les blocs de support (5a, 5b, 6a, 6b) sur lesquels l'au moins une barre (4a, 4b) est montée, sont démontés et montés pour démonter et monter l'au moins une barre (4a, 4b).

14. Procédé selon la revendication 13, **caractérisé en ce que** les barres (4a, 4b) du même ensemble (3a, 3b) sont démontées et montées conjointement aux blocs de support correspondants (5a, 5b, 6a, 6b).
